# EUROPEAN PATENT SPECIFICATION

(11) **EP 3 303 112 B1**
(45) Date of publication and mention of the grant of the patent: **03.07.2019**
(21) Application number: 16728255.7
(22) Date of filing: 27.05.2016
(51) Int. Cl.: B63B 1/08, B63B 3/08, B63B 9/04, B63B 1/40, B63B 5/24, B63B 35/44

(54) **STERN EXTENTION FOR A VESSEL**
HECKERWEITERUNG FÜR EIN SCHIFF
EXTENSION DE POUPE POUR UN NAVIRE

(30) Priority: 29.05.2015 EP 15169893
(43) Date of publication of application: 11.04.2018
(73) Proprietor: Ulstein Design & Solutions AS, 6067 Ulsteinvik (NO)
(72) Inventor: ULSTEIN, Tore, 6065 Ulsteinvik (NO); KAMSVÅG, Øyvind Gjerde, 6065 Ulsteinvik (NO)
(74) Representative: Plougmann Vingtoft a/s
(86) International application number: PCT/EP2016/062059
(87) International publication number: WO 2016/193169

(56) References cited:
- CA-A- 1 230 784
- DE-A1- 3 924 362
- DE-U1-202007 011 280
- JP-A- S56 167 578

## Description

### FIELD OF THE INVENTION

The present invention relates to a vessel and a stern extension for being mounted on the watertight hull of a vessel as an extension to the stern, the stern extension comprising a stern unit extending in a rearwards direction from the stern, the stern unit comprising side faces adjoined along a vertical center plane thereof, the side faces providing a barrier partly defining a stern unit enclosure, wherein the side faces constitute a continuous extension of the hull shape of the stern.

### BACKGROUND OF THE INVENTION

Vessels, such as off shore service vessels, are often designed for performing a specific type of operation and are thus highly specialised construction. When demand changes,this may be a challenge for the ship owner, as the vessel may not be optimal or suitable at all for the new type of operation in demand. Sometimes, this results in the conversion of existing vessels form being specialised in one type of operation to being specialised in another type of operation. Such conversions may be significant, both in terms of time required to perform the conversion and resources required. Especially, when the conversion requires modification of the hull of the vessel, the resources required are significant and may not be profitable.

To make a vessel suitable for a wider array of tasks and mitigate the risk of vessels not being suitable for the services in demand, vessels may be designed a multi-purpose vessels. However, the drawback of multipurpose vessels may be that they are not capable of operating in an efficient manner given a specific task. Additionally, multi-purpose vessels may have to be designed with equipment that is only occasionally used, making the vessel unnecessarily expensive to build, operate and maintain. Hence, an improved vessel that can relatively easily be converted and adapted to perform specific types of operations would be advantageous. Additionally, it would be advantageous to have equipment that can be installed on vessels to provide additional functionality and widen the field of application of the vessel. In particular, it would be advantageous if such equipment could be installed pier side, not requiring the vessel to go into a dry dock, and thus reduce the time the vessel has to stay out of operation.

DE 3924362 discloses a ship's hull beind designed to operate efficiently at both low and high speed. This is achieved by arranging that the stern part of the ship or the outer shell of the stern part is either completely or partly movable relative to the main part of the hull. When operating at high speed the stern part or outer shell is raised so that it is above the water-line of the main part of the hull. When operating at low speed the stern part is lowered so that its undersurface is aligned with the undersurface of the main part of the hull.

### OBJECT OF THE INVENTION

It is an object of the present invention to wholly or partly overcome the above disadvantages and drawbacks of the prior art. More specifically, it is an object to provide a vessel having a wider field of application and equipment for vessels, which makes it possible to widen the field of application of an existing vessel. In particular, it may be seen as an object to provide a construction that may change the hydrodynamic and functional characteristics of a vessel, without having to modify the existing hull.

### SUMMARY OF THE INVENTION

Thus, the above described object and several other objects are intended to be obtained in a first aspect of the invention by providing a vessel having watertight hull providing a bow and a stern, comprising a stern extension for being mounted on the watertight hull as an extension to the stern, the stern extension comprising: a stern unit extending in a rearwards direction from the stern, the stern unit comprising side faces adjoined along a vertical center plane thereof, the side faces providing a barrier partly defining a stern unit enclosure, wherein the side faces constitute a continuous extension of the hull shape of the stern; and a mounting mechanism for securing the stern unit to the hull of the vessel, wherein the stern unit is externally mounted on the watertight hull, thereby providing an extension of the stern without prolonging the watertight hull, and a mounting mechanism is adapted to displace the stern unit relatively to the hull in the rearwards direction away from the transom to an aft position thereby providing a downwards facing opening between a transom of the vessel and the stern unit barrier.

By externally is meant that the stern unit is mounted outside the watertight parts of the hull and by a rearwards direction is meant a direction extending away from the stern of the vessel substantially parallel with a longitudinal direction of the vessel.

By having the stern unit mounted externally on the hull and thus not compromising the watertightness of the hull, the stern unit is not considered to form a part of the hull. Being able to extend the stern and thus change the hydrodynamic characteristics of the vessel, without having to compromise the existing watertight hull, provides significant advantages. For example, the hydrodynamic characteristics may be changed with none or minor global structural impact, requiring only local modifications and without influencing the vessel rule length and the overall buoyancy of the hull.

Such downwards facing opening between a transom of the vessel and the stern unit barrier may be utilized as a moon pool or shielded area for deploying and retrieving equipment into and from the sea. Such shielded area of ocean may be used as for deploying and retrieving equipment, such as remote operated vehicles (ROV), into and from the sea.

Furthermore, the stern unit enclosure may be adapted to be in fluid communication with the surrounding sea. In another embodiment seals may be provided between the stern unit and the watertight hull along the edges of the stern unit barrier to seal the stern unit enclosure. Thereby a substantially watertight stern unit enclosure is provided allowing for water to be removed from the enclosure.

According to a third aspect, the side faces of the stern unit may be adjoined along a stern line forming a stern unit having a pointed stern shape. A pointed stern shape provides specific hydrodynamic chrematistics that may be advantageous if the vessel operates with the aft facing towards the incoming waves. The pointed stern will split the waves and help to reduce impact forces acting on the vessel.

Additionally, the stern line of the pointed stern unit may be angled towards the bow of the vessel above the waterline of the vessel. By having a pointed stern with a stern line angled in a forward direction, the volume of the stern unit in a downwards direction is increased and the volume of the stern unit in the upwards direction is reduced. This volume distribution may help to further guide incoming waves around the vessel and reduce impact forces from waves.

Moreover, the side faces of the stern unit, at least below the waterline of the vessel, may be provided with a plurality of apertures adapted to allow passage of water in and out of the stern unit enclosure. The passages through the bottom face of the stern unit provide a dampening effect by absorbing forces from incoming waves.

Still further, the stern extension may further comprise shielding elements adapted to cover sideways facing openings provided between the stern unit and vessel hull when the stern unit is in the aft position. Hereby the shielded area provided between the stern unit and the transom of the vessel hull is further protected for sideways facing waves.

Furthermore, the mounting mechanism of the stern extension may be adapted to be mounted onto an open deck of the vessel and extending over a rear most edge of the deck. Hereby the stern extension can easily be lifted in place using a traditional crane and mounted on the vessel.

According to a fourth aspect of the invention, the mounting mechanism may comprise dampers adapted to allow minor displacement of the stern unit when positioned in the aft position in order to provide a damping effect by absorbing wave response forces. Additionally, the dampers may be part of an energy collection mechanism for harvesting energy from incoming waves when the stern unit is positioned in the aft position.

According to a fifth aspect of the invention, the stern unit may be made from a non-metallic material such as a composite material or a polymer. The material of the stern unit may also be made flexible and resilient under the influence of wave induced hydrodynamic forces. By making the stern unit resilient, forces resulting from incoming waves may be better absorbed by the vessel.

The present invention further relates to a stern extension for being externally mounted on a watertight hull as described. Such stern unit may be an add-on unit that can be mounted on both newly build ships or retrofitted to existing vessels.

A stern extension according to preferred embodiments of the invention preferably has a tapered aft ship hull shape. It may advantageously be combined with a bow as disclosed in WO2006/096066 and in particular with the bow disclosed in the figures of that patent specification.

According to preferred embodiments, the propulsion units may be arranged below the waterline.

A design according to preferred embodiments of the invention allows a vessels to do an increased number of possible operations compared to a normal submerged transom stern design. It also increases the operational window, allowing vessel stern-to operations.

A tapered aft ship hull shape according to preferred embodiments of the invention preferably has a vertical volume distribution, with buoyancy volume increasing along a centerline curving FWD. The result is typically a horizontal reduction of the vertical buoyancy volume increase, resulting in a gentle displacement effect. Combined with a higher aft ship hull shape, this may allow for higher relative wave heights, enabling a larger operational window.

Such performance gains may either be translated in increased operability for a certain vessel size, or may result in reduced vessel overall main dimensions. This typically means that operations normally executed by bigger vessels may now be executed using a smaller vessel, hence reducing CAPEX and OPEX.

A stern extension according to preferred embodiments of the invention may improve one or more of the following:
∘ Overall operability
∘ FOC by increasing transit speed and reducing speed loss
∘ Wave response
∘ Comfort
∘ Dynamic positioning
∘ Power consumption

Further, analysis has indicated improvements in:
∘ Wave Drift and Current Load
∘ Up to to 50% lower forces
∘ Ability to manoeuver astern with ease
∘ Greatly reduced stern wave
∘ Reduced slamming and whipping loads in waves
∘ Resistance and FOC ahead
∘ 5%-25% (draught dependant) lower than immersed transom stern
∘ Resistance and FOC astern
∘ 50-60% lower than transom stern
∘ Comparable to ahead resistance
∘ Reduced Roll Motions
∘ 10% - Increased uptime
∘ Reduced Motion Sickness Incidence - MSI
∘ Enabling operations stern to weather

Analysis indicates several performance possible gains when operating in waves as compared to traditional transom stern designs:
∘ Lower peak loads in X-direction, approx. 25%, as a result of wave energy being split by the taper
∘ Peak loads are offset in time, and forces are stretched over a longer time interval. This is a result of the gradual volume increase, ie volume is gradually introduced into and through the waves, resulting in forces being distributed over a longer period of time, offering less structural stress, lower accelerations and greater comfort
∘ Force development in the time domain shows less transients with less reflection and diffraction forces offering smooth displacement effects
∘ The vertical extent of the stern area offers more protection of the working deck and equipment, hence increased safety and higher operability
∘ Less spray being generated and less water on working deck.

The aspects of the present invention described above may each be combined with one another. These and other aspects of the invention will also be apparent from and elucidated with reference to the embodiments described hereinafter.

### BRIEF DESCRIPTION OF THE FIGURES

The vessel and stern extension according to the invention will now be described in more detail with regard to the accompanying figures. The figures show one way of implementing the present invention and is not to be construed as being limiting to other possible embodiments falling within the scope of the attached claim set.
Figures 1-4 show different perspectives of the stern extension in an aft position mounted on a vessel,
Figure 5a-5c show the stern extension in a retracted position abutting against the watertight hull of the vessel,
Figure 6a-6b show the stern extension in an intermediate position,
Figure 6c illustrates the shielding elements adapted to cover sideways facing openings provided between the stern unit and vessel hull,
Figure 7a-7c show an embodiment of a stern extension comprising a plurality of apertures (14) adapted to allow passage of water in and out of the stern unit enclosure,
Figure 8 illustrating two different stern designs according to preferred embodiments of the invention. Fig. 8A illustrates a blunt/flat plate transom and fig. 8B illustrates an embodiment where the stern centreline above the waterline slants forward; alternatively, Fig. 8A illustrates the ship without the stern extension and figure 8B illustrates the ship with the stern extension in a retracted position.
Figure 9 illustrates schematically movement of a ship according to a preferred embodiment of the invention,
Fig. 10 illustrates the two ships of fig. 8 in three dimensional views as seen from the aft and arranged side-by-side.
Figure 11 illustrates the ship of fig. 8B in different view:
   Fig. 11A is a three dimensional view of the shape below the design water line of the ship;
   Fig. 11B is a three dimensional side view of the shape above the design water line of the ship;
   Fig. 11C is a three dimensional side view of the shape above the design water line and a section of the below water line shape;
   Fig. 11D is a three dimensional side view of the shape above the design water line and a section of the below water line shape;

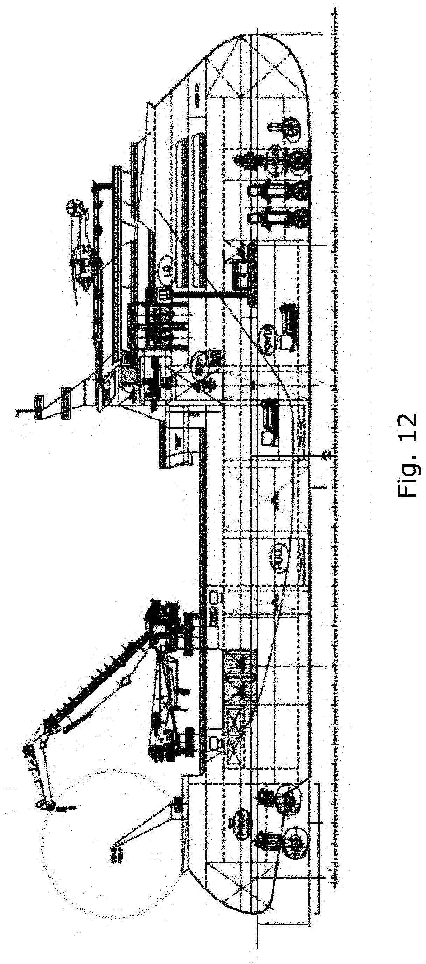

Figure 12 illustrates a ship according to a preferred embodiment of the invention.

### DETAILED DESCRIPTION OF AN EMBODIMENT

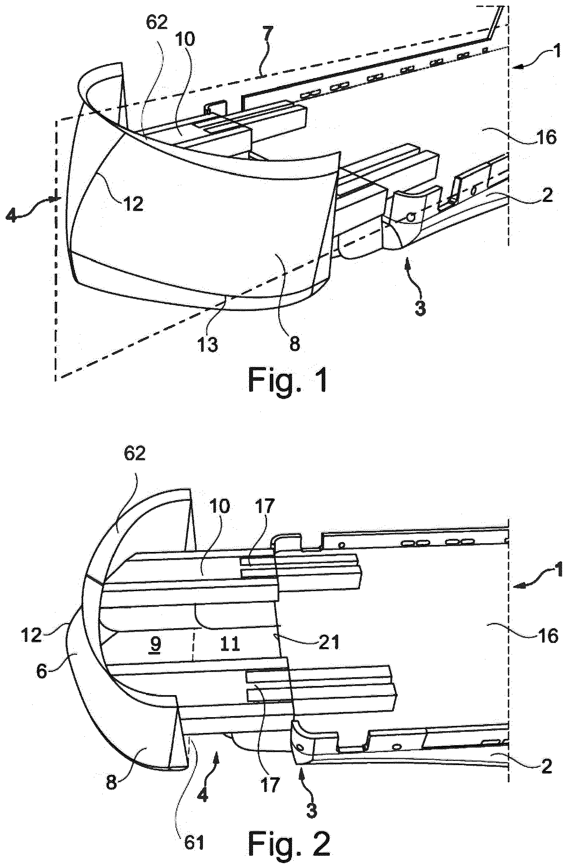

Referring to Fig. 1, the stern extension comprises a stern unit 5 extending in a rearwards direction from the stern, and a mounting mechanism 10 for securing the stern unit to the hull of the vessel. The mounting mechanism shown comprises massive linear actuators 17, such as hydraulic rams, however the mounting mechanism may also be of a different design. The purpose of the mounting mechanism is to position the stern unit 5 in the area behind the aft most part of the vessel. In Fig. 1 the stern unit is in the aft position, and the mounting mechanism is extended to its full length.

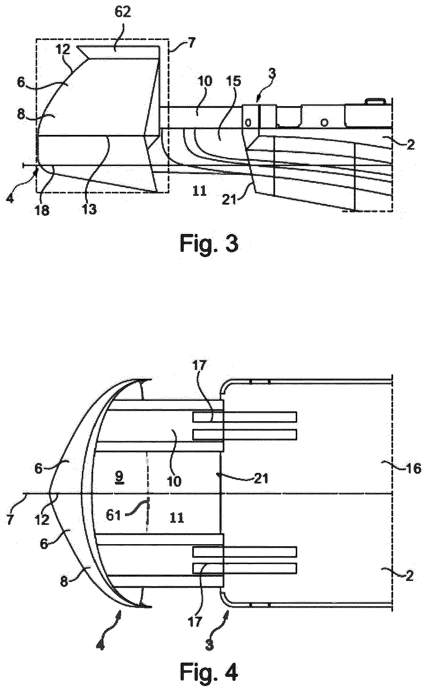

Referring to Fig. 2, the stern unit comprises side faces 6 adjoined along a vertical center plane 7 extending in a vertical direction along a center line of the vessel. The side face constitutes the sides, rear and bottom of the stern unit and provides a barrier 8 partly defining a stern unit enclosure 9. The dotted line 61 shown in Fig. 2 illustrates a bottom edge 61 of the stern unit barrier 8 located below water when the vessel is floating. Part of the stern unit is thus located below the design waterline 18, and therefore not shown in the figures. The rear part of the stern unit constitutes the aft most part of the vessel and the joining of the side faces at the rear of the stern unit constitutes a stern line 12. The stern line extends both above and below the design water line 18 of the vessel. As seen from Fig. 3 a part of the stern line 12 above the design water line 18 is angled towards the bow of the vessel. In other embodiments of a vessel according to the invention, the forward inclination of the stern line may also begin below the design water line. Towards the top of the stern unit barrier, the stern line changes direction in a knuckle point form leaning in a forward direction to leaning in a rearwards direction. Hereby an outwards reaching splashguard 62 is provided along an upper edge of the stern unit barrier for protecting the stern unit enclosure from sea water coming over the top of the stern unit barrier.

The joining of the side faces along the stern line provides a pointed stern suitable for splitting the waves as they hit the structure. The shape of the stern unit guides incoming waves around the hull and may thus reduce the forces acting on the vessel compared to for example vessels having a flat stern/transom.

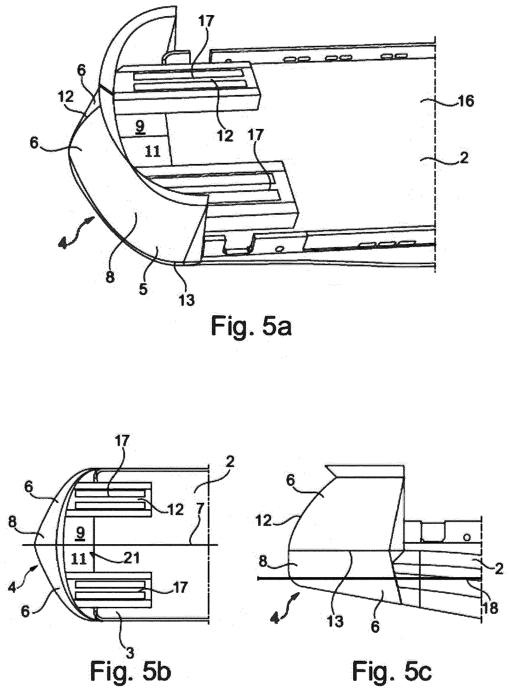

Fig. 5a-c show the stern unit in a retracted position wherein the side faces of the stern unit constitute a continuous extension of the hull shape of the stern of the vessel. As seen from the figures, the side faces adjacent a transom of the vessel are substantially parallel with the hull shape of the stern of the vessel to provide a continuous extension. The edge of the stern unit side face may abut or substantially abut the watertight hull. The stern unit thus extend the stern, but as the stern unit is externally mounted on the watertight hull, it does not interfere with or prolong the watertight hull.

A sealing arrangement (not shown) may also be provided between the stern unit side faces and the watertight hull thereby providing a sealing connecting. By providing a seal, the stern unit enclosure is sealed off when in the retracted position. Hereby water trapped in the stern unit enclosure may be removed to reduce the overall weight of the vessel. Here it is noted that the present invention should not be mistaken for traditional hull extensions extending the stern superstructure of a vessel. Such hull extensions are provided to increase the size of the watertight hull of a vessel, thereby increasing vessel displacement and the overall vessel characteristics. The present inventions is a hull or stern add-on, which is mounted outside the watertight vessel hull. Stern extensions according to embodiments of the present invention thus do not influence the watertightness of the vessel hull and can for example be retrofitted pier-side without dry-docking the vessel.

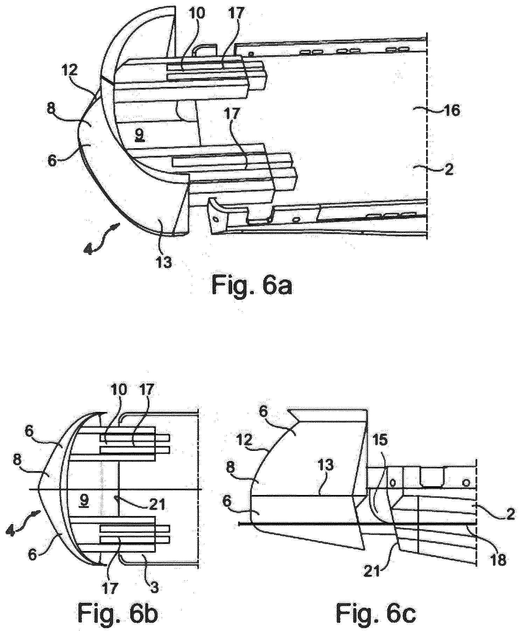

Fig. 4 shows the stern unit in the extended position with the mounting mechanism fully extended. When the stern unit is displaced in the rearwards direction away from the transom 21 of the vessel, a downwards facing opening 11 is provided between the transom 21 and the edge 61 of the stern unit barrier. The size of the opening may be adjusted by varying the distance by which the stern unit is displaced away from the transom. Fig. 6a-c show the stern unit in an intermediate position wherein the mounting mechanism is only partly extended. Hereby a more narrow opening between the transom and the edge of the stern unit barrier is provided.

Both in extended and intermediate positions the stern extension may comprise shielding elements 15 for covering sideways facing openings provided between the stern unit barrier and vessel hull. By covering such openings, waves may be prevented from entering the stern unit enclosure 9 and calmer waters may be provided. In a configuration with shielding elements 15, the stern unit enclosure 9 is thus defined by the stern unit barrier, the shielding elements and the vessel hull. The shielding elements may be variable in length to accommodate different opening sizes depending on the position of the stern unit. The shielding elements may comprise a number of barrier elements arranged in a slidable relationship.

The mounting mechanism comprises hydraulic rams providing the necessary structural stability to position the stern unit in the desired positions aftwards of the vessel. The mounting mechanism is dimensioned to absorb significant forces acting on the stern unit barrier due to incoming waves and movement of the vessel. The mounting mechanism is also capable of displacing/retracting the stern unit in rough weather, if for example an operation has to be terminated due to bad weather. In the figures, the mounting mechanism is shown to be mounted on an open deck and extending over an upper edge of the transom of the vessel. The mounting mechanism may also by mounted between decks of the vessel and thus extend from an intermediate position along the height of the transom. By mounting the stern extension onto an open deck the whole structure may easily be mounted when a need exists, and demounted when the stern extension is no longer necessary. Hereby the same stern extension may be used in connection with a plurality of different vessels.

It is also readily understood by the skilled person that the mounting mechanism may be arranged along the sides of the vessel hull. Further, as an alternative to the linear displacement mounting mechanism adapted to displace the stern unit in a linear direction, the vessel may comprise mounting mechanisms that rotates and/or translate the stern unit to move the stern unit between the retraced and the extended positions.

The displacement mechanism may also incorporate damping means, such as hydraulic or mechanical dampers, designed to absorb forces created by incoming waves colliding with the stern unit barrier. Still further, the displacement mechanism may incorporate energy harvesting means adapted to produce energy based on movement of the stern unit by incoming waves and the movement of the vessel.

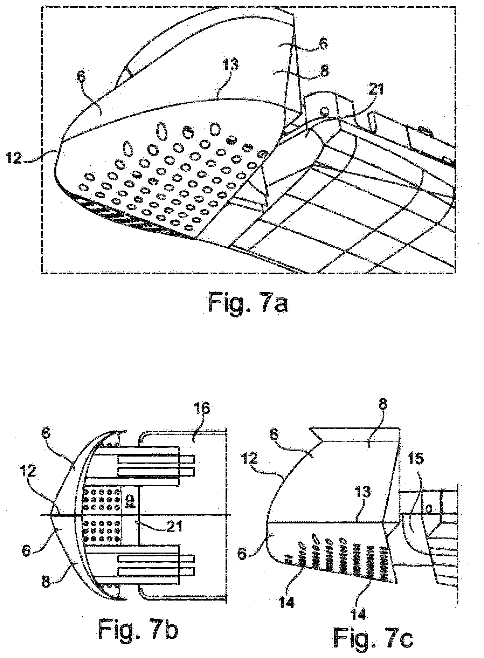

Fig. 7a-c show an embodiment of the stern extension 4 comprising a stern unit 5 having a stern unit barrier provided with a plurality of apertures 14 adapted to allow passage of water in and out of the stern unit enclosure. By allowing water to enter the stern unit enclosure, the stern extension may provide a dampening effect on incoming waves, thereby reducing the forces acting on the vessel. The apertures may also facilitate the follow of water in and out of the stern unit enclosure, thereby reducing flow through the opening between the stern unit barrier and the vessel hull.

The stern unit may be made from a non-metallic material such as a composite material or a polymer. This may reduce the weight of the stern extension compared to a similar structure made from traditional hull materials. By reducing the weight of the stern extension, installation may be more convenient as mounting equipment requirements are reduced. Additionally, by making the stern unit from a material not traditionally used for hulls, the stern extension may not be considered to affect vessel rule length. A lighter stern unit may also reduces the global structural impact on the vessel and reduce the modifications needed to install the stern extension.

Furthermore, by choosing specific materials for the stern unit barrier and possible other components of the stern extension, further functionality may be built into the stern extension. In one embodiment, the stern unit is made from a flexible material, which is resilient under the influence of wave induced hydrodynamic forces. Hereby the material of the stern unit barrier may help to absorb the forces of incoming waves. Using resilient materials for the hull of a vessel may not be desirable as the watertight hull is a vital part of a vessel. However, as the stern extension is externally mounted and thus does not influence the integrity of the watertight hull, the risk of using alternative materials for this construction may be less significant.

A stern according to preferred embodiments introduces a ship stern shape with a carefully selected volume distribution with typically greatly increased displacement volume above the waterline, intended to reduce or eliminate known negative effects from existing designs, including flat plate and aft slanting transom areas.

A stern shape according to preferred embodiments is designed with slender waterlines in order to introduce the displaced volume into a wave in a more gradual manner. When the bow smoothly penetrates and parts the waves, waves gently flow to the side with a minimum absorption of wave energy.
This means that displacement forces are distributed over a longer time period, reducing retardation forces. The stern shape design reduces wave reflection and diffraction forces, eliminating wave impact loads in the stern area.

Additionally, the stern centreline above the waterline typically slants forward - with the aft ship volume extending higher to prevent waves from climbing all the way to the higher decks - and is finished off with a small spray rail (spray guard).

The hull may be enclosed all the way up to the aft weather deck area, which allows waves to climb higher up the hull than on comparable sized traditional hulls. Heave and pitch accelerations are reduced due to improved displacement volume and improved waterline shapes.

A stern design according to preferred embodiment of the invention may provide the following benefits:
- Reduced acceleration and retardation results in lower wave drift forces and acceleration levels
- Near or total elimination of green water occurrences on the aft decks.

Beyond the above mentioned advantages, one may also experience:
- A reduction in the probability of hard weather/wave impact damages in the aft ship and aft deck areas due to significantly lower wave reflection/diffraction forces
- An improved work environment:
   ∘ Lower acceleration and retardation levels result in improved safety during operation, thereby improving vessel operability
   ∘ Due to smoother movements and reduced bow impact/pressure loads, noise and vibration levels are reduced. This leads to improved crew rest periods and higher crew work efficiency, and thereby improved comfort and safety
- Better protection aft deck equipment against the elements, and thereby lower maintenance
- Greater strength and less complicated hull structure components due to the "egg shape"
- Smaller loads on aft ship skin plates and stiffeners due to the absence of a flat plate transom area
- Significantly reduced probability of icing due to better equipment protection and a smooth aft ship hull surface
- Easier installation of de-icing equipment due to the taller/extended and smooth aft ship

With a sloping centreline that starts preferably at the extreme aft of the vessel, the stern shape allows for the sharpest possible bow shape and results in a continuous bow shape that smoothly divides both waves and calm water. Increased volume above and upfront allows the vessel to efficiently respond to large waves.

Large ships with blunt/flat plate transom areas have wave diffraction/ reflection. The reaction force for a sharpened shape above the waterline will be lower than for a blunt shape because the reflected waves are reduced.

Below the water surface, the described hull stern shape preferably features a conventional smooth underwater hull form.

The volume distribution and sectional angles may offer a distinct advantage in terms of the habitability of the aft area, both in terms of the vertical accelerations and/or the lower relative wave elevations, which reduce the frequency of slamming below the hull shape. The lower motions in the aft body are typically achieved with a higher damping in pitch and with a reduced fore-aft a-symmetry of the hull. The absence of flare typically yields a lower added resistance.

The following features may be achieved with a stern according to preferred embodiments:
- *Small waves:* Wavepiercing
- *Medium waves* - *Piercing displacer:* Small increase in added mass as well as damping and restoring forces
- *Big waves* - *Gentle displacer, very little spray:* Large increase in added mass as well as damping and restoring forces
- *Large*/ *Freak Waves* - *Large displacement volume, moving gently through the wave, survivability:* Very large increase in added mass as well as damping and restoring forces

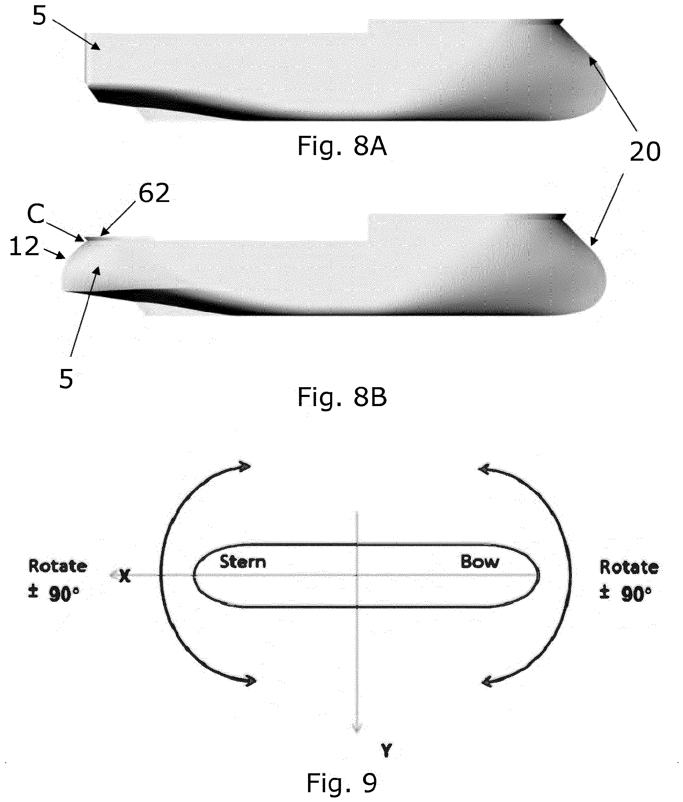

Reference is made to fig. 8 illustrating two different stern designs according to preferred embodiments of the invention. Fig. 8A illustrates a blunt/flat plate transom and fig. 8B illustrates an embodiment where the stern centreline 12 above the waterline slants forward. The bows of the ships fig.s 8A and 8B are shown to be identical which they not necessarily have to be. Further, as the stern unit 5 are shaped to produce a seamless extension of the hull, the seam is not illustrated. Alternatively, Fig. 8A illustrates the ship without the stern extension and figure 8B illustrates the ship with the stern extension in a retracted position.

The sterns illustrated in fig.s 8A and 8B is introduced in a ship having a bow with a backward slanting stem line 20 (and as disclosed in WO2006096066). A stern shaped according to preferred embodiments facilitates operations stern on weather, with comparable characteristics as that of the bow (with the backward slanting stem line). Such a "double-ended" solution (figure 8B) allows the vessel to operate +/-90° by the bow and stern, increasing the opportunity to continual operation without disconnecting the equipment subsea, when the wind and wave directions are shifting as illustrated in fig. 9.

It has been found that for a ship having a stern as shown fig. 8B, the risk of water on deck - including spray - from stern is reduced often to a minimum in addition to minimizing the risk of surge and large forces being active on the stern compared to a transom stern (e.g. as illustrated in fig. 8A). By the features of a stern with forward slanting stern centreline 12, the vessel may be capable of operating with stern on weather and obtain an increased freedom in heading without disconnecting - theoretically 360°.

In preferred embodiments, the stern extension may preferably be characterised by the stern/centreline line, starting from a lower point at the vessel's waterline rises and has an increasing curvature in the aft direction of the vessel, but with a substantially diminishing curvature and in the forward direction of the vessel, optionally broken by one or more straight portions, to an upper point.

The stern extension may further be characterised in that a spray board extends out from the upper knuckle point, the stem line being bent sharply at said knuckle point C (see fig. 8B) and being terminated at the top of the spray board (splash guard) 62.

The stern extension may further be characterised in that the flare angles of the vessel in the aft hip, and above the design water line are in the range of 9 - 45 degrees relative to the height direction of the vessel.

The stern extension may further be characterised in that the vessel stern angles form between the transition point and the upper point and increase from 0 degrees at the transition point to 55 degrees at the upper point relative to the height direction of the vessel.

Preferred embodiments of a ship according to preferred embodiments may be characterised as an aft ship arrangement for a vessel of the displacement type, wherein Bwl is the breadth measured at a given draught, Tdwl; Lwl is the water line length measured at a given draught, Tdwl; Htdwl is the hull height measured from a given draught, Tdwl, up to the top of the spray board, wherein the aft ship consists of or comprises the part of the ship aft of the vessel's midship mark and includes flare angles and the vessel has a transversely symmetrical hull shape about its centre line CL, and a substantially conventional aft ship form below the design water line Tdwl, wherein the stern centreline line of the vessel turns substantially forward in a positive x-direction in relation to the ship length direction.

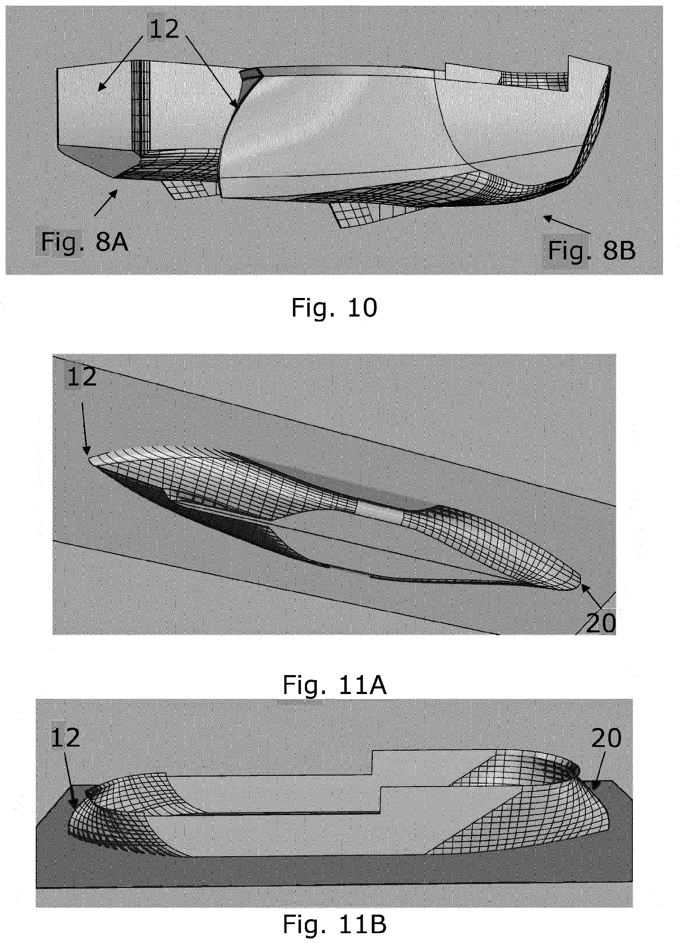

Fig. 10 illustrates the two ships of fig. 8 in three dimensional views as seen from the aft and arranged side-by-side.

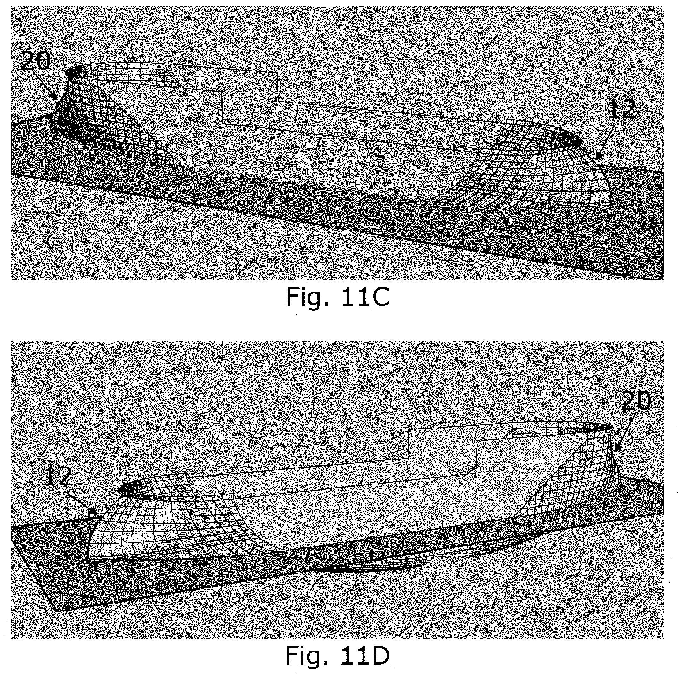

In figures 10 and 11 lines are shown on selected surfaces to illustrate the contours of the ships.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A vessel (1) having a watertight hull (2) providing a bow and a stern (3), comprising a stern extension (4) for being mounted on the watertight hull as an extension to the stern, the stern extension comprising:
- a stern unit (5) extending in a rearwards direction from the stern, the stern unit comprising side faces (6) adjoined along a vertical center plane (7) thereof, the side faces providing a barrier (8) partly defining a stern unit enclosure (9), wherein the side faces constitute a continuous extension of the hull shape of the stern; and
- a mounting mechanism (10) for securing the stern unit to the hull of the vessel,
wherein the stern unit is externally mounted on the watertight hull, thereby providing an extension of the stern without prolonging the watertight hull, and wherein the mounting mechanism is adapted to displace the stern unit relatively to the hull in the rearwards direction away from the transom to an aft position thereby providing a downwards facing opening (11) between a transom (21) of the vessel and the stern unit barrier.

2. The vessel according to claim 1 , wherein the stern unit enclosure is adapted to be in fluid communication with the surrounding sea.

3. The vessel according to claims 1 or 2, wherein the side faces of the stern unit are adjoined along a stern line (12) forming a stern unit having a pointed stern shape.

4. The vessel according to any of the preceding claims, wherein the stern line of the stern unit is angled towards the bow of the vessel above a design waterline (18) of the vessel.

5. The vessel according to any of the preceding claims, wherein the stern unit barrier, at least below a waterline of the vessel, is provided with a plurality of apertures (14) adapted to allow passage of water in and out of the stern unit enclosure.

6. The vessel according to any of the preceding claims, where in the stern extension further comprises shielding elements (15) adapted to cover sideways facing openings provided between the stern unit and vessel hull when the stern unit is in the aft position.

7. The vessel according to any of the preceding claims, wherein the mounting mechanism is adapted to be mounted onto an open deck (16) of the vessel and extending over a rear most edge of the deck.

8. The vessel according to any of the preceding claims, wherein the mounting mechanism comprises linear actuators (17), the length of which can be increased to displace the stern unit into the aft position.

9. The vessel according to claim 8, wherein the linear actuators are hydraulic rams.

10. The vessel according to any of the preceding claims, wherein the mounting mechanism comprises dampers adapted to allow minor displacement of the stern unit when positioned in the aft position in order to provide a dampening effect by absorbing wave response forces.

11. The vessel according to any of the preceding claims, wherein the mounting mechanism comprises an energy collection mechanism for harvesting energy from incoming waves when the stern unit is positioned in the aft position.

12. The vessel according to any of the preceding claims, wherein the stern unit is made from a non-metallic material such as a composite material or a polymer.

13. The vessel according to any of the preceding claims, wherein the stern unit is made from a flexible material, which is resilient under the influence of wave-induced hydrodynamic forces.

14. A stern extension (4) for being externally mounted on a watertight hull (2) of a vessel (1) having a bow and a stern (3), the stern extension comprising:
- a stern unit (3) adapted to extend in a rearwards direction from the stern, the stern unit comprising side faces (6) adjoined along a vertical center plane (7) thereof, the side faces providing a barrier (8) partly defining a stern unit enclosure (9), wherein the side faces are adapted to constitute a continuous extension of the hull shape of the stern; and
- a mounting mechanism (10) for securing the stern unit to the hull of the vessel, wherein the mounting mechanism is adapted to displace the stern unit relatively to the hull in the rearwards direction away from the transom to an aft position thereby providing a downwards facing opening (11) between a transom (21) of the vessel and the stern unit barrier,
wherein the stern unit is suitable to be externally mounted on the watertight hull, thereby providing an extension of the stern without prolonging the watertight hull.

## Patentansprüche

1. Schiff (1), aufweisend einen wasserdichten Rumpf (2), der einen Bug und ein Heck (3) bereitstellt, das eine Heckverlängerung (4) zur Befestigung am wasserdichten Rumpf als eine Verlängerung des Hecks umfasst, wobei die Heckverlängerung umfasst:
- eine Heckeinheit (5), die sich vom Heck aus in einer Rückwärtsrichtung erstreckt, wobei die Heckeinheit Seitenflächen (6) umfasst, die entlang einer vertikalen Mittelebene (7) davon aneinandergrenzen, wobei die Seitenflächen eine Sperre (8) bereitstellen, die teilweise eine Heckeinheitenumschließung (9) definiert, wobei die Seitenflächen eine kontinuierliche Verlängerung der Rumpfform des Hecks bilden; und
- einen Befestigungsmechanismus (10) zum Sichern der Heckeinheit am Rumpf des Schiffes,
wobei die Heckeinheit außen am wasserdichten Rumpf befestigt ist, wodurch eine Verlängerung des Hecks ohne Verlängerung des wasserdichten Rumpfs bereitgestellt wird, und
wobei der Befestigungsmechanismus ausgelegt ist, um die Heckeinheit relativ zum Rumpf in der Rückwärtsrichtung vom Heckspiegel weg in eine hintere Position zu verschieben, wodurch zwischen einem Heckspiegel (21) des Schiffes und der Heckeinheitensperre eine nach unten gerichtete Öffnung (11) bereitgestellt wird.

2. Schiff nach Anspruch 1, wobei die Heckeinheitenumschließung ausgelegt ist, um mit der umgebenden See in Fluidverbindung zu stehen.

3. Schiff nach Anspruch 1 oder 2, wobei die Seitenflächen der Heckeinheit an einer Hecklinie (12) aneinandergrenzen, die eine Heckeinheit bildet, die eine spitze Heckform aufweist.

4. Schiff nach einem der vorhergehenden Ansprüche, wobei die Hecklinie der Heckeinheit über einer Konstruktionswasserlinie (18) des Schiffes zum Bug des Schiffes hin abgewinkelt ist.

5. Schiff nach einem der vorhergehenden Ansprüche, wobei die Heckeinheitensperre zumindest unterhalb einer Wasserlinie des Schiffes mit einer Vielzahl von Öffnungen (14) versehen ist, die ausgelegt sind, um den Durchtritt von Wasser in die Heckeinheitenumschließung und aus dieser zu ermöglichen.

6. Schiff nach einem der vorhergehenden Ansprüche, wobei die Heckverlängerung ferner Abschirmelemente (15) umfasst, die ausgelegt sind, um zur Seite gerichtete Öffnungen abzudecken, die zwischen der Heckeinheit und dem Schiffsrumpf bereitgestellt sind, wenn sich die Heckeinheit in der hinteren Position befindet.

7. Schiff nach einem der vorhergehenden Ansprüche, wobei der Befestigungsmechanismus ausgelegt ist, um auf einem offenen Deck (16) des Schiffes befestigt zu werden und sich über eine hinterste Kante des Decks zu erstrecken.

8. Schiff nach einem der vorhergehenden Ansprüche, wobei der Befestigungsmechanismus lineare Stellglieder (17) umfasst, deren Länge vergrößert werden kann, um die Heckeinheit in die hintere Position zu verschieben.

9. Schiff nach Anspruch 8, wobei die linearen Stellglieder Hydraulikzylinder sind.

10. Schiff nach einem der vorhergehenden Ansprüche, wobei der Befestigungsmechanismus Dämpfer umfasst, die ausgelegt sind, um eine geringfügige Verschiebung der Heckeinheit zu ermöglichen, wenn diese sich in der hinteren Position befindet, um durch Absorbieren von Wellenreaktionskräften einen Dämpfungseffekt bereitzustellen.

11. Schiff nach einem der vorhergehenden Ansprüche, wobei der Befestigungsmechanismus einen Energieaufnahmemechanismus zum Aufnehmen von Energie ankommender Wellen umfasst, wenn sich die Heckeinheit in der hinteren Position befindet.

12. Schiff nach einem der vorhergehenden Ansprüche, wobei die Heckeinheit aus einem nichtmetallischen Material wie z. B. einem Verbundmaterial oder einem Polymer hergestellt ist.

13. Schiff nach einem der vorhergehenden Ansprüche, wobei die Heckeinheit aus einem flexiblen Material hergestellt ist, das unter dem Einfluss wellenbedingter hydrodynamischer Kräfte elastisch ist.

14. Heckverlängerung (4) zur Befestigung außen an einem wasserdichten Rumpf (2) eines Schiffes (1), der ein Bug und ein Heck (3) aufweist, wobei die Heckverlängerung umfasst:
- eine Heckeinheit (3), die ausgelegt ist, um sich vom Heck aus in einer Rückwärtsrichtung zu erstrecken, wobei die Heckeinheit Seitenflächen (6) umfasst, die entlang einer vertikalen Mittelebene (7) davon aneinandergrenzen, wobei die Seitenflächen eine Sperre (8) bereitstellen, die teilweise eine Heckeinheitenumschließung (9) definiert, wobei die Seitenflächen ausgelegt sind, um eine kontinuierliche Verlängerung der Rumpfform des Hecks zu bilden; und
- einen Befestigungsmechanismus (10) zum Sichern der Heckeinheit am Rumpf des Schiffes, wobei der Befestigungsmechanismus ausgelegt ist, um die Heckeinheit relativ zum Rumpf in der Rückwärtsrichtung vom Heckspiegel weg in eine hintere Position zu verschieben, wodurch zwischen einem Heckspiegel (21) des Schiffes und der Heckeinheitensperre eine nach unten gerichtete Öffnung (11) bereitgestellt wird,
wobei die Heckeinheit geeignet ist, um außen am wasserdichten Rumpf befestigt zu werden, wodurch eine Verlängerung des Hecks ohne Verlängerung des wasserdichten Rumpfs bereitgestellt wird.

## Revendications

1. Navire (1) à coque étanche (2) comprenant une proue et une poupe (3), comportant une extension de poupe (4) destinée à être montée sur la coque étanche sous forme d'extension de la poupe, l'extension de poupe comprenant :
- une unité de poupe (5) s'étendant vers l'arrière depuis la poupe, l'unité de poupe comprenant des faces latérales (6) jointes le long de son plan central vertical (7), les faces latérales formant une barrière (8) définissant en partie une enceinte (9) de l'unité de poupe, les faces latérales constituant une extension continue de la forme de coque de la poupe ; et
- un mécanisme de montage (10) permettant de fixer l'unité de poupe à la coque du navire,
l'unité de poupe étant montée extérieurement sur la coque étanche, fournissant ainsi une extension de la poupe sans prolonger la coque étanche et
le mécanisme de montage étant conçu pour déplacer l'unité de poupe par rapport à la coque dans le sens arrière, à l'écart du tableau jusqu'à une position arrière, fournissant ainsi une ouverture (11) orientée vers le bas, entre un tableau (21) du navire et la barrière de l'unité de poupe.

2. Navire selon la revendication 1, dans lequel l'enceinte de l'unité de poupe est adaptée pour être en communication fluidique avec la mer environnante.

3. Navire selon les revendications 1 ou 2, dans lequel les faces latérales de l'unité de poupe sont jointes le long d'une ligne de poupe (12) formant une unité de poupe à forme de poupe pointue.

4. Navire selon l'une quelconque des revendications précédentes, dans lequel la ligne de poupe de l'unité de poupe est inclinée vers la proue du navire au-dessus d'une ligne de flottaison (18) du navire.

5. Navire selon l'une quelconque des revendications précédentes, dans lequel la barrière de l'unité de poupe, au moins en dessous d'une ligne de flottaison du navire, est munie d'une pluralité d'ouvertures (14) adaptées pour permettre le passage de l'eau dans l'enceinte de l'unité de poupe et hors de cette dernière.

6. Navire selon l'une quelconque des revendications précédentes, dans lequel l'extension de poupe comprend en outre des éléments de protection (15), adaptés pour recouvrir des ouvertures orientées latéralement entre l'unité de poupe et la coque du navire lorsque l'unité de poupe est en position arrière.

7. Navire selon l'une quelconque des revendications précédentes, dans lequel le mécanisme de montage est adapté pour être monté sur un pont découvert (16) du navire et s'étendant au-dessus d'un bord extrême arrière du pont.

8. Navire selon l'une quelconque des revendications précédentes, dans lequel le mécanisme de montage comprend des actionneurs linéaires (17), dont la longueur peut être augmentée pour déplacer l'unité de poupe jusqu'à la position arrière.

9. Navire selon la revendication 8, dans lequel les actionneurs linéaires sont des béliers hydrauliques.

10. Navire selon l'une quelconque des revendications précédentes, dans lequel le mécanisme de montage comprend des amortisseurs adaptés pour permettre un déplacement mineur de l'unité de poupe lorsqu'elle est positionnée dans la position arrière, afin de fournir un effet d'amortissement en absorbant les forces de réponse des vagues.

11. Navire selon l'une quelconque des revendications précédentes, dans lequel le mécanisme de montage comprend un mécanisme de collecte d'énergie destiné à récupérer l'énergie des vagues entrantes lorsque l'unité de poupe est positionnée dans la position arrière.

12. Navire selon l'une quelconque des revendications précédentes, dans lequel l'unité de poupe est constituée d'un matériau non métallique tel qu'un matériau composite ou un polymère.

13. Navire selon l'une quelconque des revendications précédentes, dans lequel l'unité de poupe est constituée d'un matériau flexible, qui est élastique sous l'influence de forces hydrodynamiques induites par les vagues.

14. Extension de poupe (4) destinée à être montée à l'extérieur sur une coque étanche (2) d'un navire (1) comprenant une proue et une poupe (3), l'extension de poupe comprenant :
- une unité de poupe (3), adaptée pour s'étendre dans une direction arrière à partir de la poupe, l'unité de poupe comprenant des faces latérales (6) jointes le long de son plan central vertical (7), les faces latérales formant une barrière (8) définissant en partie une enceinte (9) d'unité de poupe, les faces latérales étant adaptées pour constituer une extension continue de la forme de coque de la poupe ; et
- un mécanisme de montage (10) permettant de fixer l'unité de poupe à la coque du navire, le mécanisme de montage étant adapté pour déplacer l'unité de poupe par rapport à la coque dans la direction arrière à l'écart du tableau vers une position arrière, fournissant ainsi une ouverture orientée vers le bas (11), entre un tableau (21) du navire et la barrière d'unité de poupe,
l'unité de poupe pouvant être montée extérieurement sur la coque étanche, fournissant ainsi une extension de la poupe sans prolonger la coque étanche.
